# EUROPEAN PATENT SPECIFICATION

(11) **EP 0 551 956 B1**
(45) Date of publication and mention of the grant of the patent: **11.12.1996**
(21) Application number: 93200103.5
(22) Date of filing: 15.01.1993
(51) Int. Cl.: A01J 7/00, A01J 5/017, A01J 5/007

(54) **An implement for automatically milking an animal**
Vorrichtung zum automatischen Melken eines Tieres
Dispositif de traite automatique d'un animal

(30) Priority: 17.01.1992 NL 9200091
(43) Date of publication of application: 21.07.1993
(73) Proprietor: C. van der Lely N.V., NL-3155 PD Maasland (NL)
(72) Inventor: van der Lely, Cornelis, CH-6300 Zug (CH); van der Lely, Ary, 3155 PD Maasland (NL)
(74) Representative: Mulder, Herman

(56) References cited:
- EP-A- 0 182 654
- EP-A- 0 221 733
- EP-A- 0 300 582
- EP-A- 0 360 354
- EP-A- 0 385 539
- AU-B- 464 891
- US-A- 4 516 530

## Description

The invention relates to an implement for automatically milking an animal, comprising a milking robot with a carrier member adapted to carry a number of teat cups which are connectable automatically to the teats of the udder of an animal to be milked, such that they are movable with respect to said carrier member, while, after milking, they are brought into a fixed position with respect to said carrier member.

Such an implement is known from EP-A1-0 360 354. In said document, after milking, each of the teat cups is brought into and held in a fixed position relative to the carrier member by means of a flexible member, such as a cable, and a cylinder built in one of the robot arms. When a teat cup is brought under a respective teat, the teat cup can be connected thereto by an upward movement effected by electro-magnetic coupling means, while, after milking, the teat cup is pulled down in its position on the carrier member and maintained therein by activating the cylinder. This has the disadvantage that in the rest position of the teat cups on the carrier member, the cylinders are permanently activated, while the flexible member is permanently subjected to a certain tension.

It is an object of the invention to obviate these disadvantages to a significant extent.

According to the invention, the implement of the type defined above, is characterized in that the teat cups are held in their position on the carrier member by means of a number of on/off switchable electromagnets. This construction is particularly advantageous in the case that the teat cups to be uncoupled from the relevant teats after milking are pulled against or onto the carrier member by means of cylinders and flexible members, such as cables or a belt, as than the teat cups can be held against or onto the carrier member by means of the electromagnets and the cylinders be inactivated. Particularly when the milk flow in a teat cup has stopped or has fallen below to a predetermined value, a computer activates the reconnection of the teat cup to the carrier member simultaneously or substantially simultaneously with the stopping of the vacuum in the teat cup. The vacuum in a teat cup can be stopped independently of the vacuum in the other teat cups when the milk flow in the relevant teat cup has stopped or has fallen below to a predetermined value. By these measures it will be possible to uncouple each teat cup from a relevant teat independent whether the milk flow from the other teats has stopped or fallen below to a predetermined level or not. Then, in a favourable embodiment, for each udder quarter the milking period as well as the milk yield may individually be measured and recorded in a computer.

Further the milk yield of an animal in a predetermined period, e.g. 24 hours, may be measured and recorded in the computer. According to a further aspect of the invention, the implement comprises remote from the milking machine, in a different building such as a dwelling-house, alarm means and/or display means by means of which it can be observed whether the milk flow is steady and how much milk there has been produced by various cows in a certain past period of time of, for example, 24 hours. By these measures the operator or farmer has the possibility to control the milk process from a place remote from the milking machine.

For a better understanding of the invention and to show how the same may be carried into effect, reference will now be made, by way of example, to the accompanying drawings, in which:
Figure 1 is a plan view of a milking parlour comprising a milking robot, in which the outlines of an animal, in the present case a cow, are shown;
Figure 2 is a view of the milking robot, taken in the direction of arrow II-II in Figure 1;
Figure 3 is a plan view of an enlarged part of the robot arm, on which the teat cups are disposed;
Figure 4 is a side view, taken in the direction of arrow IV in Figure 3;
Figure 5 is a plan view in accordance with Figure 3, in which is schematically shown the position of the teat cups relative to the robot arm and their connection thereto during milking of an animal;
Figure 6 is a side view, taken in the direction of arrow VI in Figure 5;
Figure 7 is a cross-sectional view, taken on line VII-VII in Figure 3;
Figure 8 is a side view in accordance with Figure 6 of an alternative design of the connection of the teat cups to the robot arm;
Figure 9 is a schematic plan view in accordance with Figure 1 of a design, in which the milking robot also includes a cleaning implement for the teats of the cow;
Figure 10 is a rear view of a milking parlour, provided with a semi-automatic milking implement, and
Figure 11 is, to a different scale, a schematic plan view of the milking implement of Figure 10.

In the drawings, corresponding components have been given the same reference numerals. The invention is in no way limited to the embodiments illustrated and described here; they only serve as an illustration of the inventive idea.

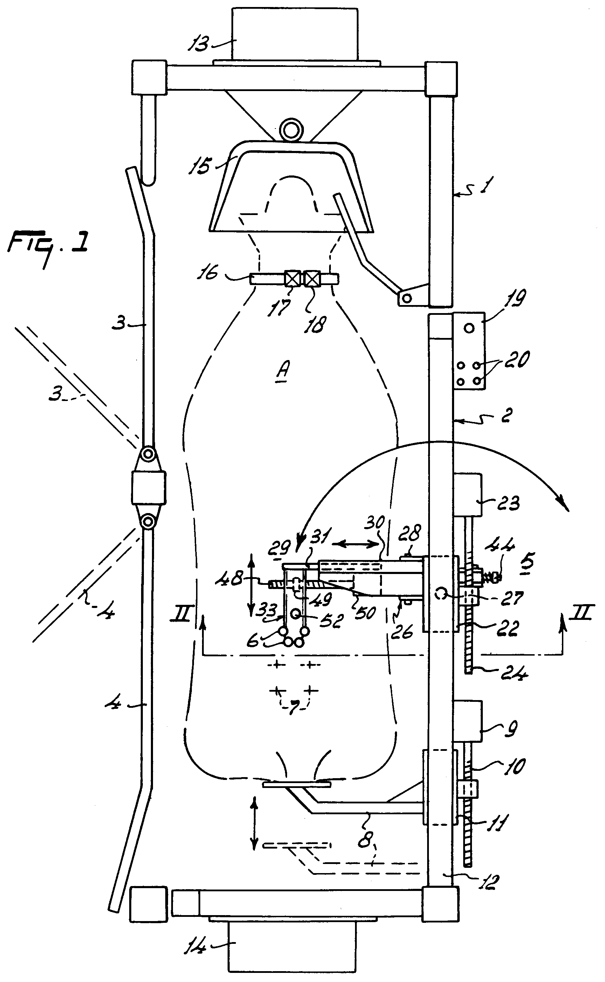

Figure 1 shows a milking parlour in which, inside a railing consisting of the front railing portion 1, the rear railing portion 2 and the railing doors 3 and 4, an animal, in the present case a cow A, is present. The milking parlour includes a milking robot 5, by means of which the teat cups 6 can be connected to the schematically shown teats 7 of the udder of the cow A. For a rough determination of the starting position, the milking robot co-operates with a contacting member 8. The contacting member 8 can be moved with the aid of a stepper motor 9, a threaded spindle 10 connected thereto and a straight guide member 11 to over a horizontal carrier 12 which forms part of the rear railing portion 2. Such a carrier 12 can alternatively be provided against or next to an existing railing. The milking parlour comprises a computer system 13 which controls an automatic feeder. The computer system 13 of the automatic feeder operates independently of a computer system 14 for the milking robot and, each time it detects, identifies and moreover accepts an animal A in the milking parlour, it can deposit a quantity of fodder matched to the animal in a feed trough 15 attached to the front railing portion 1.

The animal is provided with a collar 16, to which two separate indication and information members 17 and 18 are attached. These members each separately supply control signals to the two computer systems 13, 14 and contribute to an independent action of both computers. The milking parlour is further provided with an indicator device 19 for measuring the milk flow coming from a teat 7 of the udder of the animal A. For each of the teats a warning light 20 is present, which lights up when it is determined via a sensor in a teat cup 6 or in the milk line 21 of a cup 6 that the milk flow has stopped or decreased to below a predetermined value. The indicator device 19 may alternatively be designed such that it has two warning lights for the milk flow from each teat 7, one warning light emitting green light during milking and the other one emitting red light when the milk flow from a related teat has decreased to below the preset threshold value. In a still further design, the indicator is an acoustic device in the form of a buzzer.

In the longitudinal direction of the milking parlour, i.e. in the direction of the imaginary line between head and tail of the animal A in the milking parlour, the milking robot 5 is slidably disposed on a horizontal carrier 12 which forms part of the rear railing portion 2. For that purpose, the milking robot 5 comprises a straight guide member 22, a stepper motor 23 driving a threaded spindle 24, which engages the straight guide member 22. The stepper motor 23 is controlled by the computer 14 of the milking robot.

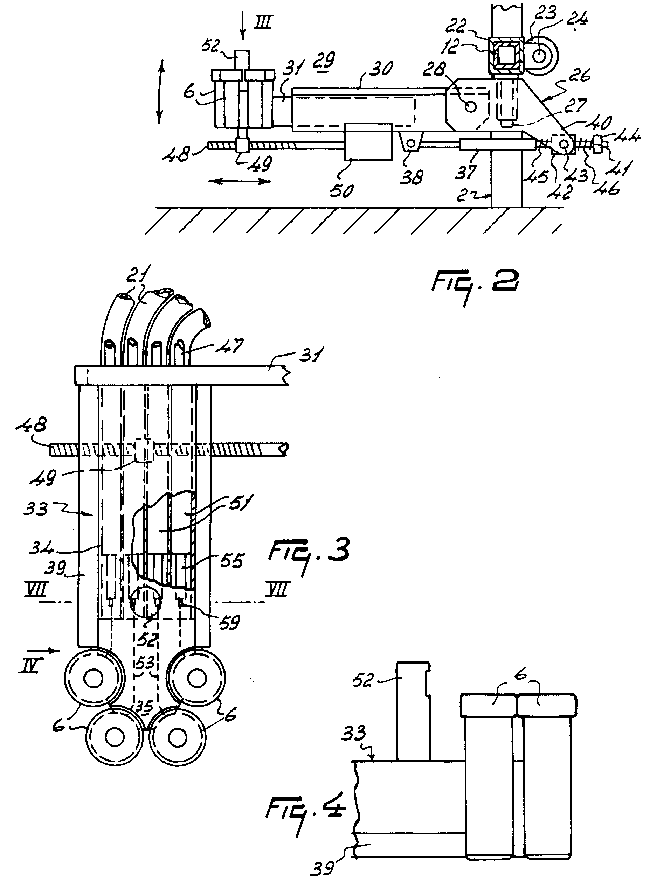

Figure 2 shows at the bottom side of the straight guide member 22 a holder 26 which is arranged pivotably about a vertical shaft 27 connected to the straight guide member 22. A telescopic arm 29, consisting of a rigid portion 30 and a portion 31 slidable therein, is attached to the holder 26 capably of pivoting about a horizontal shaft 28. A carrier member 33 for the teat cups 6 is disposed at a square angle on the end of the slidable arm portion 31. The teat cups 6 are, seen in plan view, arranged in a V-form on the carrier member 33. The carrier member 33 includes a chamber portion 34 and a contacting member portion 35, which in this construction are one integral whole. The slidable arm portion and the teat cups attached thereto can be moved relative to the rigid arm portion 30 with the aid of a threaded spindle 48 which meshes with a threaded element 49 at the bottom side of the carrier member 33. The threaded spindle 48 is driven by a stepper motor 50, which is controlled by the computer system 14 of the milking robot 5.

Relative to the holder 26, the arm 29 is supported and activated pivotably by means of an adjusting cylinder 37. The piston rod thereof acts near the midway point of the rigid arm portion 30 on a horizontal shaft 38 connected between two lugs to the rigid arm portion. The adjusting cylinder 37 is located in the extension of the arm 29 and, in this situation, extends under the end of the vertical shaft 27 to a holder arm 40 of the holder 26. The cylinder portion of the adjusting cylinder 37 is supported relative to the holder arm 40 via a rod 41 which is provided in the extension of the cylinder and is passed through a bore in a block 42, which block 42 is connected pivotably to the holder arm 40 via horizontal stub axles 43. The end of the sliding rod 41, which is provided with thread, is fitted with an adjusting nut 44. Disposed between the cylinder portion of the adjusting cylinder 37 and the block 42 is a pressure spring 45, and a second pressure spring 46 is disposed between the adjusting nut 44 and the block 42.

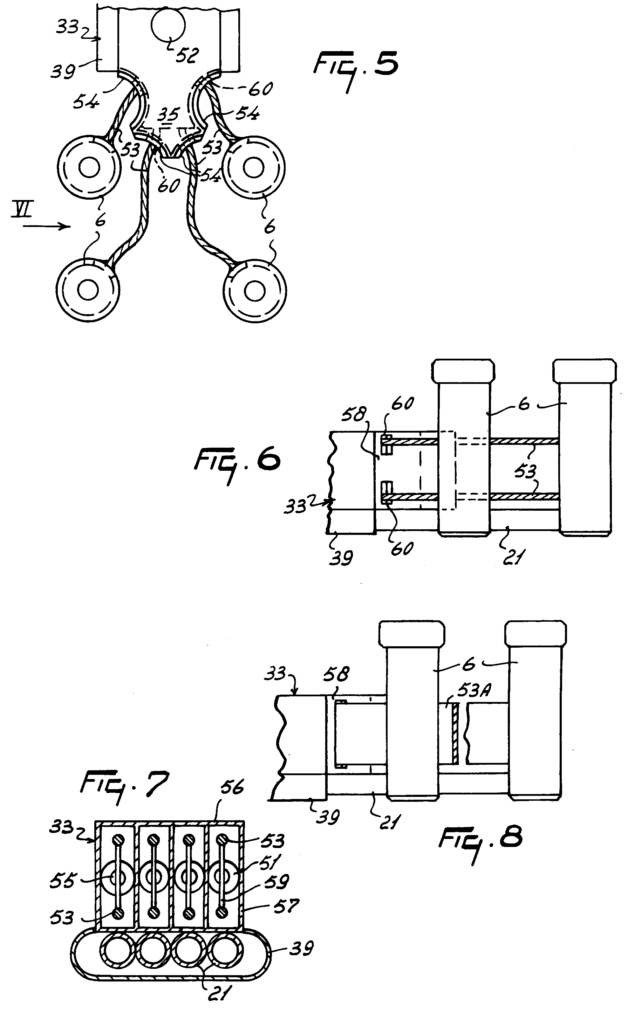

Figures 3 and 4 show a laser device 52 on the carrier member 33. The computer of the milking robot 5 determines the position of the carrier member 33, and consequently the position of the teat cups 6, with the aid of a laser device 52 which is disposed on the carrier member 33, projects to over the teat cups and supplies the computer 14 with signals on the basis of reflected radiation, so that the position of the teats 7 with respect to the carrier member 33 can be determined. The laser device 52 is positioned, seen with respect to the udder of the animal A near the teat cups arranged at the head end of the animal, on an imaginary perpendicular centre line, directed transversely to the arm 29, between the four teat cups. The leading teat cups 6 are spaced apart from each other by a smaller distance than the trailing pair of teat cups, so that each centre of a teat cup 6 indicates a point for the lines of an imaginary arrow tip which, in a plan view, is directed towards the udder.

In the chamber portion 34 of the carrier member 33 there are located, at a square angle to the arm 29, four rigidly arranged cylinders 51 which are pneumatically or hydraulically operable via supply lines 47. Connected to the piston rod 55 of each of the cylinders 51 is a flexible member 53, 53A, which is connected to a teat cup 6. In the rest position, the piston rod 55 of a cylinder 51 is retracted that far that a teat cup 6 is pulled up against a plane of contact 54 on the contacting portion 35 of the carrier member 33.

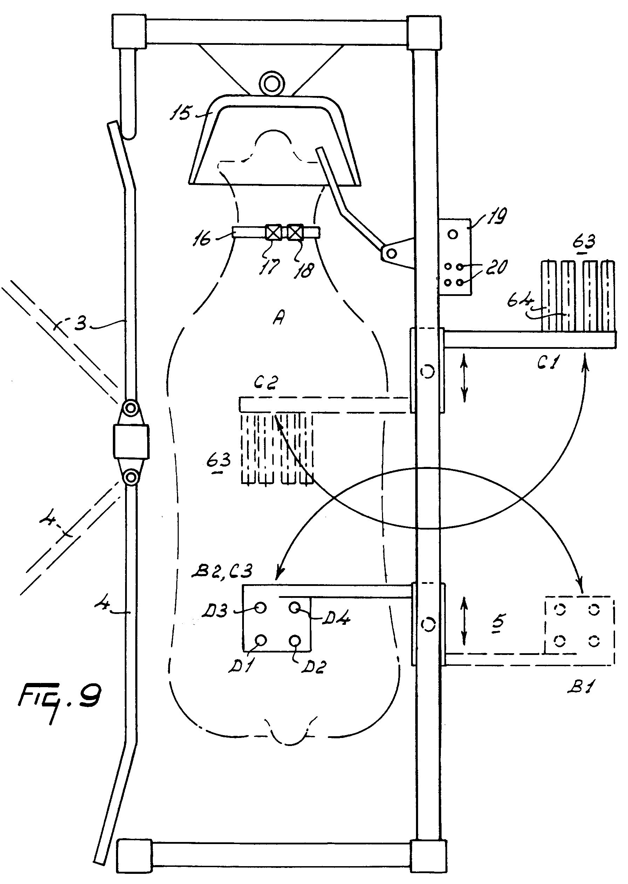

Figures 5, 6 and 8 show the configuration of the teat cups 6 during milking. In these drawings, the flexible member 53, 53A is not tightened, so that the milked animal A can move free from and to the robot arm 30. A plane of contact 54 has a curvature which at least substantially corresponds to the circumferential curvature of a teat cup 6. A plane of contact 54 is provided on the carrier member 33, which is in the form of an approximately square tube 34. The flexible member 53, 53A is preferably disposed between upright walls of the tube, so that, when it is tightened, a stable contact of the cup 6 with the contacting portion 35 is obtained in all circumstances. In the present embodiment, the plane of contact 54 is constituted by a wall 58 which closes the tube 34 and in which one or a plurality of apertures 60 for the flexible member 53, 53A are made. The apertures 60 are of a conical shape, so that the flexible member 53, 53A can smoothly be pulled through the apertures 60 at different angles. A flexible member 53, 53A is connected to a piston rod 55 via an intermediate member 59. The intermediate member may have the shape of an isosceles triangle, the intermediate member 59 being connected to the piston rod 55 near the apex angle of the said triangular shape. In accordance with a first design as shown in Figure 6, a flexible member can consist of two cables or cords 53 of a suitable flexible material, which cables 53 have one end connected in a lateral direction, i.e. to an upright wall of a teat cup 6. The other end may be attached to the intermediate member 59. In accordance with an alternative design as shown in Figure 8, the flexible member consists of a strip or belt 53A which extends in an upwardly directed plane.

Figure 7 shows, in a cross-sectional view, at the bottom side of the bottom wall 57 of the carrier member 33 a flattened tube 39, through which for the purpose of protection the milk hoses 21 of the teat cups 6 are passed. Such a tube 39, through which also further lines may be passed, prevents the robot arm 29 from being caught on obstacles, if any, by means of its lines and wires.

Although the teat cups 6 can be held against or onto the carrier member 33 by means of the cylinders 51, according to this invention they are held against or onto the carrier member 33 by means of on/off switchable electromagnets. These electromagnets are mounted on the carrier member, e.g. near the planes of contact 54, and are individually operable. Particularly, they can be switched on together, while they can be switched off individually. The electromagnets work together with the cylinders 51. The cylinders 51 are able to pull up the teat cups 6 against or onto the carrier member 33 by means of one or more cables 53 or by means of the belt 53A, while the electromagnets are able to hold the teat cups against or onto the carrier member 33. With the aid of the computer 14, control signals can be generated which cause an off-switching of the electromagnet for a relevant teat cup 6 when said teat cup is to be attached to a teat, and an on-switching of said electromagnet when this teat cup has to be uncoupled from the relevant teat and be reconnected to the carrier member 33. The control signals can also provoke an activating of the cylinder 51 of this teat cup 6 for a predetermined time interval as soon as the teat cup 6 has to be uncoupled from said teat. After an electromagnet for a relevant teat cup is switched off, said teat cup is moved upwardly and sucked around a respective teat by means of a partial vacuum generated in said teat cup 6.

Figure 9 shows a milking parlour in which a cow A is present, the milking implement comprising apart from the milk robot 5 a teat-cleaning device 63 with cleaning elements 64 for cleaning the teats of the animal to be milked. The milk robot 5 and the cleaning device 63 are displaceably mounted on a guide member arranged at one of the longitudinal sides of the milk box or milking parlour, while the carrier member 33 as well as the cleaning elements 64 are rotatable about an upwardly directed axis from a position outside the milk box into a position under the animal. The direction of rotation of the carrier member from the rest position is opposite to the direction of rotation of the cleaning elements 64 from the rest position. From their respective rest positions, the carrier member 33 and cleaning elements 64 are able to follow circle-like curves to move through a foremost and a hindmost leg, the first part of which curves being directed opposite to each other. The robot does not only milk the cow A, but first cleans her teats 7. When the cow A enters the milking parlour through the entrance door 3, the teat cups 6 are in position B1 and the teat-cleaning device 63 is in position C1. As soon as the cow A has entered the milking parlour, the teat cleaner 63 rotates through 180° to the position C2. Thereafter the cleaning device 63 moves along the horizontal carrier 12 to position C3. During these motions, the cleaning device 63 is at a somewhat lower level than the horizontal carrier 12, so that it can pass under it in an advantageous manner. The teats are cleaned in the position C3. Thereafter the cleaning device moves again to the position C2 and the teat cups automatically move from position B1 to position B2, the latter position corresponding to the position C3 of the cleaning device 63. The laser detector 52, or a different type of detector, determines the position of the teats 7, whereafter the teat cups are automatically coupled thereto. Immediately after the cow A has been milked, the teat cups 6 return to position B1 and, after a further cow A has arrived in the milking parlour, the teat cleaning device 63 moves again to position C3 and the procedure described is repeated.

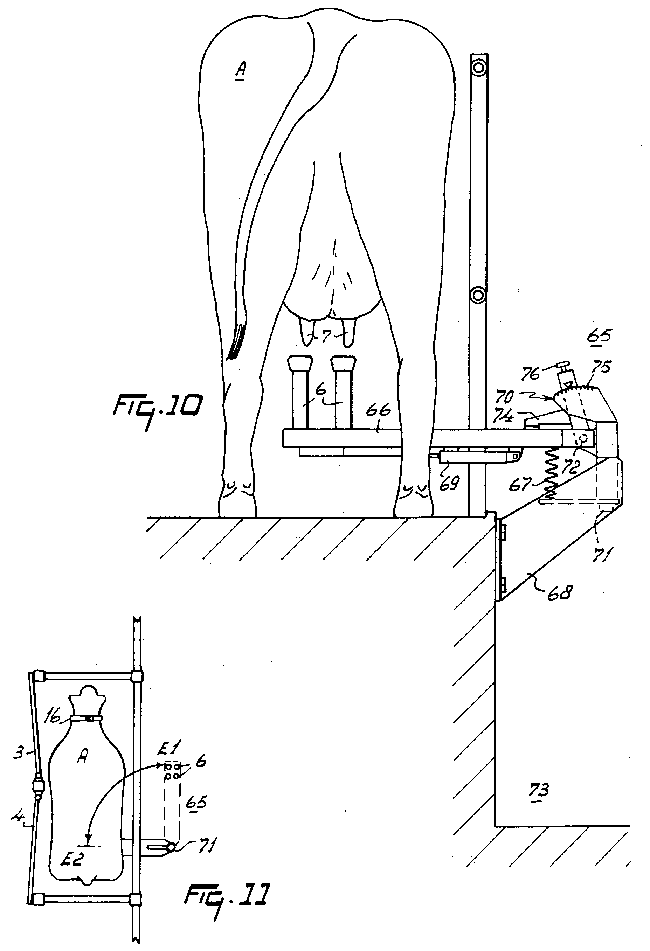

Figure 10 is a rear view and Figure 11 a reduced plan view of the milking parlour, in which a manually operated milking machine 65 is provided against the wall of an operator's pit 73. In this situation, the teat cups 6, as was also the case with the milking robot 5 already described, are disposed on an approximately horizontally extending arm 66 which is movable in all directions. The arm 66 is upwardly pivotal about a shaft and is flexibly attached to a holder 68 by means of a pusher spring 67 bearing thereon. Because of this support, the teat cups 6 are easily couplable to the teats 7. When a teat 7 does not produce milk any more, the underpressure in the relevant teat cup 6 will be automatically stopped. This promotes a low somatic cell count of the milk and the risk of mastitis is reduced.

The pneumatic cylinders 69 which uncouple the teat cups 6 from the teats 7 when the milk flow stops or decreases to below a predetermined preset value, are provided under the horizontal carrier arm 66. The height of the arm 66 carrying the cups 6 is adjustable by means of a locking member 70 which comprises a pressure member 74 and is also pivotal about the shaft 72. The arm 66 is further mounted such that it is rotatable about a vertical shaft 71. As is shown in Figure 11, the arm can be moved from a rest position E1 to an operative position E2, which corresponds to C2 and C3 in Figure 9. The locking member 70 has a serrated edge 73 which is rigid but can pivot together with the arm 66 about the upwardly extending shaft 71, into which edge a pawl 76 is drawn and locked there by a (non-shown) tension spring. The arm 66 with teat cups 6 is simultaneously locked thereby at the proper height. So as to be able to connect the cups 6 to the teats 7, the arm 66 can be pivoted about the vertical shaft 71 to under the udder in the position E2. Thereafter, if desired, the height can be adapted in a simple manner by lifting the pawl 76, whereafter the pusher spring 67 pushes the arm 66 and the cups 6 upwards. Lowering the arm 66 only requires a light manual pressing of the arm 66. If the arm 66 is at a suitable height under the udder, the farmer has both arms free for the connection of the cups 6, whilst the entire connection procedure is significantly less burdening for the farmer than with the milking claws which have been customary sofar. The connecting method as well as the feature that teat cups can be connected with two hands offer a farmer the opportunity of raising his output considerably.

If the teat cups 6, as shown, have been connected during milking in an upwardly directed position to the carrier arm 66, it is not absolutely necessary to uncouple the teat cups 6 from the teat, when the milk flow stops. Without the presence of underpressure in the teat cup, the teat cup 6, while resting on a preferably dish-like seat in a plateau at the end of the arm 66, might remain connected to or near the teat until all four teat cups 6 have ended their milking action.

The method of operation of the milking robot will now be described hereinafter.

The carrier member has four teat cups 6 which are connected to a carrier member 33 via flexible members 53, 53A. Taken in a direction from the rear, from left to right the teats might be numbered as follows: rear left D1, rear right D2, front left D3 and front right D4.

After the location of the teats 7 has been determined by the laser device 52 or another type of detector, the cups 6 move to the udder of the animal A. The teat cup for teat D1 is, for example, connected first. As soon as the cup 6 has been connected to the teat 7 and the milking operation has started, the air pressure in the pneumatic adjusting cylinder 51 of this teat cup 6 stops and the teat cup 6 then becomes freely movable relative to the carrier member 33. If an electromagnet has been used for the connection, the electric current is at that moment switched off from the electromagnet. Thereafter the carrier member 33 automatically moves to teat D2, where the same action occurs. This coupling method is repeated also for the teats D3 and D4. During milking, the teat cups 6 are flexibly connected to the robot arm 29 by means of the milk hoses 21 and the flexible members 53, 53A. This flexible connection is advantageous for the milk yield. The flexibility of the teat cup 6 connected to the teat 7 is still further increased if the robot arm 29 is moved by one or more hydraulic or pneumatic cylinders and if the pressure on the oil or of the air in the cylinders, which determine the location of the robot arm, is removed. Very advantageously, the connected teat cups 6 can also move in all directions in this manner.

In addition, the free motion of a connected teat cup 6 is promoted by the light and possibly flexible material, of which the carrier member 33 and the robot arm 29 have been made. The weight of this material is low and the mass forces are low.

When a teat 7 does not or practically not produce milk any more, the underpressure in the teat cup 6 automatically disappears and simultaneously or substantially simultaneously the flexible members 53, 53A pull the teat cup 6 into its seat, i.e. its plane of contact 54, at the carrier member 33. This rapid drop of the underpressure in the teat cup 6 and the withdrawal of the teat cup are beneficial to a low somatic cell count of the milk. The risk of illnesses, such as mastitis, is reduced thereby and milking is more agreeable to the animal. After all the teats have been milked, the robot arm rotates through approximately 180° to a position outside the milking station and the cow can leave the milking parlour.

A computer 13, which controls the feeding system and makes any further information available, is disposed near the feed trough. This computer 13 can, for example, control the quantity of fodder served to the cow in the feed trough. The cow has a collar 16 which forms part of cow-identification means. Two indication-information members 17, 18 are attached to the collar 16 of the cow A. The one information member co-operates with the computer-controlled feeding system. The other information member co-operates with the computer 14, which is provided near the rear side of the cow A and manages the process control of the milking robot 5. When the feeding system and the milking system comprising the said milking and cleaning devices 5, 63, 65 and the computer 14, are mounted completely or partly separately, the advantage is obtained that supplies and repair operations of the individual systems are easier to perform and an automatic milking system can be used in a simple manner in addition to an existing feeding system. The cow-identification means are provided with a first microprocessor unit in which the relevant data for the fodder supply of an animal to be milked is stored, a second microprocessor unit in which the relevant data for the milking process of an animal to be milked is stored and with a transceiver system. The indication-information member 17 includes the first microprocessor unit with the transceiver system and is able to communicate with the transceiver system of the computer system for feeding the animal. The indication-information member 18 includes the second microprocessor with the first mentioned transceiver system and is able to communicate with the transceiver system of the computer system for controlling the milking robot 5 and the automatic milking. The pressure springs 45, 46 provided in the robot arm produce a flexible up and down motion, whereby the weight of a teat cup 6 and carrier member 33 is reduced. The up and down motion of the teat cup 6 can, as shown, be effected pneumatically. Furthermore, a stepper motor can adjust the length of the telescopic robot arm 29. The stepper motor structures can be replaced by hydraulic or pneumatic cylinders or suchlike structures. By means of the above-described straight guide members 22, 29 provided along and transversely to the milking parlour and by the pivotal motion about the shaft 28, a teat cup 6, mounted at the end of the robot arm, can be moved upwardly, downwardly and laterally and at the same time in all directions, after activation of the relevant stepper motor and/or adjusting cylinder.

The milking implement can still function adequately if two teats of the cow are adjacent to each other spaced apart by only a few centimetres, e.g. 2 cms, as, for example, the rearmost teat cups D1 and D2 are located in the initial position very closely to each other on their carrier member 33. This arrangement is important for a milking robot 5 which must always operate, also during the night, without any supervision.

The constructions described in the description can usually be used with great advantage in an automatically operating milking robot, but also in a completely or partly manually operated milking implement 65.

The milking implement, comprised of a number of teat cups 6 which are connectable to a number of teats 7 of an animal, such as a cow A, is preferably used in a stable with freely moving cows or a similar such accommodation. The milking system comprising the said milking and cleaning implements and the computer 14, and the feeding system can then be of an automatic type and be designed such that the computers 13, 14 controlling the milking system and the feeding system allow a cow to enter the milking parlour, in accordance with the sequence in which she is recorded in the computer.

In addition, the milking system and the feeding system can be automated and designed such that the computers 13, 14 controlling the milking system and the feeding system ensure that a cow which is at the beginning of a lactation period is given priority, as regards her entrance to the milking parlour, over cows which are at the end of the lactation period. Therefore, the implement is provided with register means for registering the lactation period of the animals. Particularly, these register means are forming part of the second microprocessor unit of the cow-identification means, in which microprocessor unit the further relevant data for the milking process of the animal to be milked is stored. The computer system for controlling the milking robot comprises a special programme to ensure that the animals which are at the beginning of a lactation period are given priority for entering the milking parlour over animals which are not at the beginning of the lactation period.

The milking system and the feeding system may also be of such an automated construction and so designed that the computers 13, 14 controlling the milking system and the feeding system allow cows A into the milking parlour in accordance with serial numbers such as A1, A2, A3, A4, A5 etc., assigned to the cows A.

It is furthermore possible to milk a cow A in a stable with freely moving cows or a similar accommodation automatically, independently of an optional recording in a computer 14 controlling the system of the instant at which each cow was milked and independently of a predetermined period of time elapsed since the cow was milked last.

The invention is not limited to the features described in the foregoing with reference to the accompanying drawings, but also relates to all the details which have not been described but are shown in the drawings and defined in the claims. The invention also relates to all sorts of modifications of the embodiment, of course being within the protective scope of the accompanying claims.

## Claims

1. An implement for automatically milking an animal, comprising a milking robot (5) with a carrier member (33) adapted to carry a number of teat cups (6) which are connectable automatically to the teats of the udder of an animal to be milked, such that they are movable with respect to said carrier member (33), while, after milking, they are brought into a fixed position with respect to said carrier member (33), characterized in that the teat cups (6) are held in said position by means of a number of on/off switchable electromagnets.

2. An implement as claimed in claim 1, characterized in that the electromagnets are mounted on the carrier member (33) and can individually be switched off.

3. An implement as claimed in claim 1 or 2, characterized in that, with the aid of the computer (14) of the milking robot (5), control signals are generated which cause an off-switching of the electromagnet for a relevant teat cup (6) when said teat cup (6) is to be attached to a teat and an on-switching of said electromagnet when this teat cup (6) has to be uncoupled from the relevant teat, and has to be reconnected to the carrier member (33).

4. An implement as claimed in claim 3, characterized in that, after an electromagnet for a relevant teat cup (6) has been switched off, said teat cup (6) is moved upwardly and sucked around a respective teat by means of a vacuum generated in said teat cup (6).

5. An implement as claimed in any one of the preceding claims, characterized in that, when the milk flow in a teat cup (6) has stopped or has fallen below to a predetermined value, a computer (14) activates the reconnection of the teat cup (6) to the carrier member (33) simultaneously or substantially simultaneously with the stopping of the vacuum in the teat cup (6).

6. An implement as claimed in claim 5, characterized in that the vacuum in a teat cup (6) can be stopped independently of the vacuum in the other teat cups (6) when the milk flow in the relevant teat cup (6) has stopped or has fallen below to a predetermined value.

7. An implement as claimed in claim 6, characterized in that the time between the stopping of the milk flow in a teat cup (6) or the falling of the milk flow in a teat cup (6) below a predetermined value on the one hand and the stopping of the vacuum in this teat cup (6) on the other hand is adjustable.

8. An implement as claimed in any one of claims 5 - 7, characterized in that the implement includes an indicator device, e.g. constituted by an acoustic device or by lights, by means of which an indication can be given when the milk flow in a teat cup has stopped or has fallen below to a predetermined value.

9. An implement as claimed in any one of the preceding claims, characterized in that the carrier member (33) is provided with cylinders (51) for pulling up the teat cups (6) against or onto the carrier member (33) by means of one or more cables (53) or by means of a belt (53A).

10. An implement as claimed in any one of the preceding claims, characterized in that the duration of the milking period of a quarter of an udder of an animal is measured and recorded in the computer (14).

11. An implement as claimed in any one of the preceding claims, characterized in that the milk yield of a teat is individually measured and recorded in the computer (14).

12. An implement as claimed in any one of the preceding claims, characterized in that the milk yield of an animal in a predetermined period, e.g. 24 hours, is measured and recorded in the computer (14).

13. An implement as claimed in claim 12, characterized in that remote from the milking machine, preferably in a different building such as the dwelling-house, indicator means such as a display are present, by means of which it can be observed how much milk has been produced in a past period of time of, for example, 24 hours.

## Patentansprüche

1. Vorrichtung zum automatischen Melken eines Tieres, die einen Melkroboter (5) mit einem Träger (33) für mehrere Zitzenbecher (6) aufweist, welche automatisch an die Zitzen des Euters eines zu melkenden Tieres derart anzuschließen sind, daß sie in bezug auf den Träger (33) beweglich sind, und die nach dem Melken in fester Lage in bezug auf den Träger (33) angeordnet werden,
dadurch gekennzeichnet, daß die Zitzenbecher (6) in dieser Lage mittels mehrerer ein- und ausschaltbarer Elektromagnete gehalten werden.

2. Vorrichtung nach Anspruch 1,
dadurch gekennzeichnet, daß die Elektromagnete an dem Träger (33) angeordnet und einzeln auszuschalten sind.

3. Vorrichtung nach Anspruch 1 oder 2,
dadurch gekennzeichnet, daß mittels des Rechners (14) des Melkroboters (5) Steuersignale erzeugt werden, die das Ausschalten des Elektromagneten für einen zugehörigen Zitzenbecher (6) auslösen, wenn der Zitzenbecher (6) an eine Zitze anzuschließen ist, und die das Einschalten des Elektromagneten auslösen, wenn dieser Zitzenbecher (6) von der zugehörigen Zitze abzukoppeln und wieder an dem Träger (33) anzubringen ist.

4. Vorrichtung nach Anspruch 3,
dadurch gekennzeichnet, daß ein Zitzenbecher (6) nach dem Ausschalten des zugehörigen Elektromagneten nach oben bewegt wird und sich mittels eines in dem Zitzenbecher (6) erzeugten Vakuums an einer zugehörigen Zitze ansaugt.

5. Vorrichtung nach einem der vorhergehenden Ansprüche,
dadurch gekennzeichnet, daß ein Rechner (14) bewirkt, daß der Zitzenbecher (6) gleichzeitig oder im wesentlichen gleichzeitig mit dem Abschalten des Vakuums in dem Zitzenbecher (6) wieder an dem Träger (33) angebracht wird, wenn der Milchfluß in einem Zitzenbecher (6) versiegt ist oder einen vorgegebenen Wert unterschritten hat.

6. Vorrichtung nach Anspruch 5,
dadurch gekennzeichnet, daß das Vakuum in einem Zitzenbecher (6) unabhängig von dem Vakuum in den anderen Zitzenbechern (6) abzuschalten ist, wenn der Milchfluß in dem zugehörigen Zitzenbecher (6) versiegt ist oder einen vorgegebenen Wert unterschritten hat.

7. Vorrichtung nach Anspruch 6,
dadurch gekennzeichnet, daß der Zeitraum zwischen dem Versiegen des Milchflusses in einem Zitzenbecher (6) oder dem Unterschreiten eines für den Milchfluß in einem Zitzenbecher (6) vorgegebenen Wertes einerseits und dem Abschalten des Vakuums in diesem Zitzenbecher (6) andererseits einstellbar ist.

8. Vorrichtung nach einem der Ansprüche 5 bis 7,
dadurch gekennzeichnet, daß die Vorrichtung eine Anzeigevorrichtung aufweist, beispielsweise eine akustische oder visuelle Vorrichtung, mittels der eine Anzeige zu erzielen ist, wenn der Milchfluß in einem Zitzenbecher versiegt ist oder einen vorgegebenen Wert unterschritten hat.

9. Vorrichtung nach einem der vorhergehenden Ansprüche,
dadurch gekennzeichnet, daß der Träger (33) mit Arbeitszylindern (51) versehen ist, um die Zitzenbecher (6) mittels eines oder mehrerer Seile (53) oder eines Riemens (53A) gegen bzw. an den Träger (33) zu ziehen.

10. Vorrichtung nach einem der vorhergehenden Ansprüche,
dadurch gekennzeichnet, daß die Dauer der Melkperiode an einem Viertel des Tiereuters gemessen und in dem Rechner (14) gespeichert wird.

11. Vorrichtung nach einem der vorhergehenden Ansprüche,
dadurch gekennzeichnet, daß der Milchertrag einer Zitze individuell gemessen und in dem Rechner (14) gespeichert wird.

12. Vorrichtung nach einem der vorhergehenden Ansprüche,
dadurch gekennzeichnet, daß der Milchertrag eines Tieres pro vorgegebener Zeitspanne, z. B. innerhalb von 24 Stunden, gemessen und in dem Rechner (14) gespeichert wird.

13. Vorrichtung nach Anspruch 12,
dadurch gekennzeichnet, daß entfernt von der Melkmaschine, vorzugsweise in einem anderen Gebäude wie z. B. einem Wohnhaus, eine Anzeigevorrichtung wie z. B. ein Display vorhanden ist, an dem abzulesen ist, wieviel Milch innerhalb eines vergangenen Zeitraumes von beispielsweise 24 Stunden erzeugt worden ist.

## Revendications

1. Dispositif de traite automatique d'un animal, comprenant un robot trayeur (5) avec un organe porteur (33) apte à porter un certain nombre de godets de trayons (6) pouvant être reliés automatiquement aux trayons du pis d'un animal à traire, de telle sorte qu'ils sont mobiles par rapport audit organe porteur (33), tandis qu'après la traite ils sont amenés en une position fixe par rapport audit organe porteur (33),
**caractérisé** en ce que les godets de trayons (6) sont tenus dans ladite position au moyen d'un certain nombre d'électro-aimants pouvant être mis sous tension ou hors tension.

2. Dispositif selon la revendication 1, caractérisé en ce que les électro-aimants sont montés sur l'organe porteur (33) et peuvent être mis hors tension individuellement.

3. Dispositif selon la revendication 1 ou 2, caractérisé en ce qu'à l'aide de l'ordinateur (14) du robot trayeur (5) des signaux de commande sont générés qui provoquent une mise hors tension de l'électro-aimant pour un godet de trayon (6) correspondant quand ledit godet de trayon (6) doit être attaché à un trayon et une mise sous tension dudit électro-aimant quand ce godet de trayon (6) doit être découplé du trayon correspondant et doit être à nouveau relié à l'organe porteur (33).

4. Dispositif selon la revendication 3, caractérisé en ce qu'après qu'un électro-aimant pour un godet de trayon (6) correspondant a été mis hors tension, ledit godet de trayon (6) est soulevé et aspiré autour d'un trayon respectif au moyen d'un vide produit dans ledit godet de trayon (6).

5. Dispositif selon l'une quelconque des revendications précédentes, caractérisé en ce qu'après que le débit de lait dans un godet de trayon (6) a cessé ou a diminué en dessous d'une valeur prédéterminée, un ordinateur (14) active le rebranchement du godet de trayon (6) avec l'organe porteur (33), simultanément ou substantiellement simultanément à l'arrêt du vide dans le godet de trayon (6).

6. Dispositif selon la revendication 5, caractérisé en ce que le vide dans un godet de trayon (6) peut être arrêté indépendamment du vide dans les autres godets de trayons (6) quand le débit de lait dans le godet de trayon (6) correspondant s'est arrêté ou a diminué en dessous d'une valeur prédéterminée.

7. Dispositif selon la revendication 6, caractérisé en ce que le délai entre l'arrêt du débit de lait dans un godet de trayon (6) ou la chute du débit dans un godet de trayon (6) en dessous d'une valeur prédéterminée, d'une part, et l'arrêt du vide dans ce godet de trayon (6), d'autre part, est réglable.

8. Dispositif selon l'une quelconque des revendications 5 à 7, caractérisé en ce que le dispositif comporte un dispositif indicateur, constitué, par exemple, par un dispositif acoustique ou par des lumières au moyen desquelles une indication pourra être donnée quand le débit de lait dans un godet de trayon s'est arrêté ou est tombé en dessous d'une valeur prédéterminée.

9. Dispositif selon l'une quelconque des revendications précédentes, caractérisé en ce que l'organe porteur (33) est muni de vérins (51) pour tirer les godets de trayons (6) contre l'organe porteur (33) ou sur celui-ci, au moyen d'un ou plusieurs câbles (53) ou au moyen d'une sangle (53A).

10. Dispositif selon l'une quelconque des revendications précédentes, caractérisé en ce que la durée de la période de traite d'un quartier du pis de l'animal est mesurée et enregistrée dans l'ordinateur (14).

11. Dispositif selon l'une quelconque des revendications précédentes, caractérisé en ce que la production de lait d'un trayon est mesurée individuellement et enregistrée dans l'ordinateur (14).

12. Dispositif selon l'une quelconque des revendications précédentes, caractérisé en ce que la production de lait d'un animal dans une période déterminée, par exemple 24 heures, est mesurée et enregistrée dans l'ordinateur (14).

13. Dispositif selon la revendication 12, caractérisé en ce que, à distance de la machine à traire, de préférence dans un bâtiment différent, tel que l'habitation, des moyens indicateurs tels qu'un affichage sont présents, au moyen desquels il est possible d'observer combien de lait a été produit au cours d'une période de temps écoulée, par exemple, de 24 heures.
